# EUROPEAN PATENT APPLICATION

(11) **EP 4 362 578 A1**
(43) Date of publication of application: **01.05.2024**
(21) Application number: 22827506.1
(22) Date of filing: 20.06.2022
(51) Int. Cl.: H04W 72/00

(54) **RESOURCE PROCESSING METHOD AND APPARATUS, ELECTRONIC DEVICE, AND STORAGE MEDIUM**

(30) Priority: 24.06.2021 CN 202110706400
(71) Applicant: Vivo Mobile Communication Co., Ltd., Dongguan, Guangdong 523863 (CN)
(72) Inventor: ZHONG, Tingting, Dongguan, Guangdong 523863 (CN); XIE, Zhenhua, Dongguan, Guangdong 523863 (CN)
(74) Representative: Lavoix
(86) International application number: PCT/CN2022/099736
(87) International publication number: WO 2022/268012

(57) **Abstract**

This application discloses a resource processing method and apparatus, an electronic device, and a storage medium, and pertains to the communication field. The resource processing method in embodiments of this application includes: in a case of determining that a target service is in an inactive state, performing, on a target resource, target processing, including first target processing and second target processing. The first target processing includes: being up to implementation; maintaining a state of the target resource; releasing the target resource in a case that the target resource has been established; and establishing the target resource in a case that the target resource has not been established. The second target processing includes at least one of the following: in a case that the target resource is a resource between a source base station for handover and a core network function in a handover scenario, performing third target processing; and in a case that the target resource is a resource between a target base station for handover and the core network function in the handover scenario, performing third target processing. The third target processing includes: being up to implementation; maintaining a state of the target resource; releasing the target resource in a case that the target resource has been established; and establishing the target resource in a case that the target resource has not been established.

## Description

### CROSS-REFERENCE TO RELATED APPLICATIONS

This application claims priority to Chinese Patent Application No. 2021107064004, filed on June 24, 2021, and entitled "RESOURCE PROCESSING METHOD AND APPARATUS, ELECTRONIC DEVICE, AND STORAGE MEDIUM", which is incorporated herein by reference in its entirety.

### TECHNICAL FIELD

This application pertains to the field of communications technologies, and specifically relates to a resource processing method and apparatus, an electronic device, and a storage medium.

### BACKGROUND

In existing multicast services, corresponding resources between a base station and a core network are always present.

However, an active state and an inactive state are introduced into communication services, and when a multicast service is in an inactive state, a processing mode for a corresponding resource is unclear.

### SUMMARY

Embodiments of this application provide a resource processing method and apparatus, an electronic device, and a storage medium, which can resolve the problem that a processing mode for a corresponding resource is unclear when a multicast service is in an inactive state.

According to a first aspect, a resource processing method is provided, where the method includes:
in a case of determining that a target service is in an inactive state, performing, by a target node, target processing on a target resource; where
the target processing includes at least one of the following:
   first target processing, where when the target processing includes the first target processing, the target resource includes a resource used for the target service between the target node and a communication peer node; and
   second target processing, where when the target processing includes the second target processing, the target resource includes a resource used for the target service between the target node and a communication peer node in a handover scenario; where
   the first target processing includes at least one of the following:
      implementation determined by the target node;
      maintaining a state of the target resource;
      releasing the target resource in a case that the target resource has been established; and
      establishing the target resource in a case that the target resource has not been established; and
      the second target processing includes at least one of the following:
         in a case that the target resource is a resource used for the target service between a source base station for handover and a core network function in the handover scenario, performing third target processing on the target resource; and
         in a case that the target resource is a resource used for the target service between a target base station for handover and the core network function in the handover scenario, performing third target processing on the target resource; where
         the third target processing includes at least one of the following:
            implementation determined by the target node;
            maintaining a state of the target resource;
            releasing the target resource in a case that the target resource has been established; and
            establishing the target resource in a case that the target resource has not been established.

According to a second aspect, a resource processing apparatus is provided, where the apparatus includes:
a first execution module, configured to: in a case of determining that a target service is in an inactive state, perform target processing on a target resource; where
the target processing includes at least one of the following:
   first target processing, where when the target processing includes the first target processing, the target resource includes a resource used for the target service between the target node and a communication peer node; and
   second target processing, where when the target processing includes the second target processing, the target resource includes a resource used for the target service between the target node and a communication peer node in a handover scenario; where
   the first target processing includes at least one of the following:
      implementation determined by the target node;
      maintaining a state of the target resource;
      releasing the target resource in a case that the target resource has been established; and
      establishing the target resource in a case that the target resource has not been established; and
      the second target processing includes at least one of the following:
         in a case that the target resource is a resource used for the target service between a source base station for handover and a core network function in the handover scenario, performing third target processing on the target resource; and
         in a case that the target resource is a resource used for the target service between a target base station for handover and the core network function in the handover scenario, performing third target processing on the target resource; where
         the third target processing includes at least one of the following:
            implementation determined by the target node;
            maintaining a state of the target resource;
            releasing the target resource in a case that the target resource has been established; and
            establishing the target resource in a case that the target resource has not been established.

According to a third aspect, a target node is provided, including a processor, a memory, and a program or instructions stored in the memory and capable of running on the processor, and when the program or instructions are executed by the processor, the steps of the resource processing method according to the first aspect are implemented.

According to a fourth aspect, a terminal is provided, where the terminal includes a processor, a memory, and a program or instructions stored in the memory and capable of running on the processor, and when the program or instructions are executed by the processor, the steps of the method according to the first aspect are implemented.

According to a fifth aspect, a target node is provided, including a processor and a communication interface, where the processor is configured to:
in a case of determining that a target service is in an inactive state, perform target processing on a target resource; where
the target processing includes at least one of the following:
   first target processing, where when the target processing includes the first target processing, the target resource includes a resource used for the target service between the target node and a communication peer node; and
   second target processing, where when the target processing includes the second target processing, the target resource includes a resource used for the target service between the target node and a communication peer node in a handover scenario; where
   the first target processing includes at least one of the following:
      implementation determined by the target node;
      maintaining a state of the target resource;
      releasing the target resource in a case that the target resource has been established; and
      establishing the target resource in a case that the target resource has not been established; and
      the second target processing includes at least one of the following:
         in a case that the target resource is a resource used for the target service between a source base station for handover and a core network function in the handover scenario, performing third target processing on the target resource; and
         in a case that the target resource is a resource used for the target service between a target base station for handover and the core network function in the handover scenario, performing third target processing on the target resource; where
         the third target processing includes at least one of the following:
            implementation determined by the target node;
            maintaining a state of the target resource;
            releasing the target resource in a case that the target resource has been established; and
            establishing the target resource in a case that the target resource has not been established.

According to a sixth aspect, a readable storage medium is provided, where a program or instructions are stored in the readable storage medium, and when the program or instructions are executed by a processor, the steps of the method according to the first aspect are implemented.

According to a seventh aspect, a chip is provided, where the chip includes a processor and a communication interface, the communication interface is coupled to the processor, and the processor is configured to run a program or instructions to implement the steps of the method according to the first aspect.

According to an eighth aspect, a computer program/program product is provided, where the computer program/program product is stored in a non-transitory storage medium, and the program/program product is executed by at least one processor to implement the steps of the method according to the first aspect.

In the embodiments of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

### BRIEF DESCRIPTION OF DRAWINGS

FIG. 1 is a structural diagram of a wireless communication system to which the embodiments of this application are applicable;
FIG. 2 is a schematic flowchart of a resource processing method according to an embodiment of this application;
FIG. 3 is a schematic structural diagram of a resource processing apparatus according to an embodiment of this application;
FIG. 4 is a schematic structural diagram of a communication device according to an embodiment of this application;
FIG. 5 is a schematic diagram of a hardware structure of a terminal for implementing the embodiments of this application;
FIG. 6 is a schematic diagram of a hardware structure of a base station for implementing the embodiments of this application; and
FIG. 7 is a schematic diagram of a hardware structure of a core network function for implementing the embodiments of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

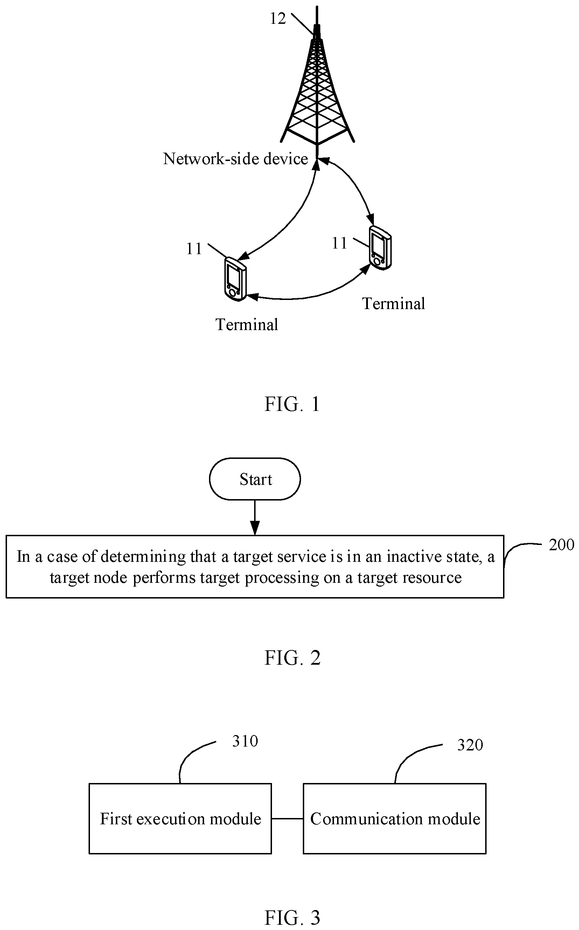

FIG. 1 is a structural diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network storage function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following describes in detail a resource processing method and apparatus provided in the embodiments of this application by using some embodiments and application scenarios thereof with reference to the accompanying drawings.

FIG. 2 is a schematic flowchart of a resource processing method according to an embodiment of this application. As shown in FIG. 2, the method includes the following step.

Step 200: In a case of determining that a target service is in an inactive state, a target node performs target processing on a target resource.

The target processing includes at least one of the following:
first target processing, where when the target processing includes the first target processing, the target resource includes a resource used for the target service between the target node and a communication peer node; and
second target processing, where when the target processing includes the second target processing, the target resource includes a resource used for the target service between the target node and a communication peer node in a handover scenario; where
the first target processing includes at least one of the following:
   implementation determined by the target node;
   maintaining a state of the target resource;
   releasing the target resource in a case that the target resource has been established; and
   establishing the target resource in a case that the target resource has not been established; and
   the second target processing includes at least one of the following:
      in a case that the target resource is a resource used for the target service between a source base station for handover and a core network function in the handover scenario, performing third target processing on the target resource; and
      in a case that the target resource is a resource used for the target service between a target base station for handover and the core network function in the handover scenario, performing third target processing on the target resource; where
      the third target processing includes at least one of the following:
         implementation determined by the target node;
         maintaining a state of the target resource;
         releasing the target resource in a case that the target resource has been established; and
         establishing the target resource in a case that the target resource has not been established.

In a communication system, an active state (active state) and an inactive state (inactive state) are introduced into multicast services. Therefore, when a multicast service is in the inactive state, processing details of N3 resources and the like need to be determined, for example, releasing a resource that has been established, so as to improve resource utilization.

Therefore, an embodiment of this application provides a resource processing method, which is used to determine a processing mode for a user plane resource of a multicast service and a user plane resource of a multicast service in a specific scenario (such as handover) when the multicast service is in an inactive state.

Optionally, in a case of determining that the target service is in an inactive state, for the target resource used for the target service between the target node and the communication peer node, the target node performs the first target processing on the target resource, that is, may perform at least one of the following:
being up to implementation (it is up to implementation), that is, no standardization is required and different manufacturers may have different resource processing methods;
maintaining a state of the target resource, that is, skipping establishing the target resource when the target resource has not been established, and retaining a currently established target resource when the target resource has been established, where the retaining the currently established target resource includes not releasing the target resource and/or retaining configuration information of the target resource;
releasing the target resource in a case that the target resource has been established; and
establishing the target resource in a case that the target resource has not been established.

Optionally, in a case of determining that the target service is in an inactive state, for the target resource being a target resource used for the target service between the target node and the communication peer node in the handover scenario, the target node performs the second target processing on the target resource. The second target processing is applicable to only the handover scenario, that is, at least one of the following may be performed:
being up to implementation (it is up to implementation), that is, no standardization is required and different manufacturers may have different resource processing methods;
maintaining a state of the target resource, that is, skipping establishing the target resource when the target resource has not been established, and retaining a currently established target resource when the target resource has been established, where the retaining the currently established target resource includes not releasing the target resource and/or retaining configuration information of the target resource;
releasing the target resource in a case that the target resource has been established; and
establishing the target resource in a case that the target resource has not been established.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

Optionally, the target node is a base station, and the communication peer node is a core network function. Optionally, the target node may be a base station, and the communication peer node may be a core network function, such as a user plane function (User Plane Function, UPF) or a multicast broadcast user plane function (Multicast Broadcast-UPF, MB-UPF). The target resource may be a user plane resource used for the target service between the base station and the core network function.

Optionally, the target node may be a base station, and the communication peer node may be a core network function, such as an access and mobility management function (Access and Mobility Management Function, AMF). The target resource may be a signaling plane resource used for the target service between the base station and the core network function.

Optionally, the target node is a core network function, and the communication peer node is a core network function.

Optionally, the target node may be a core network function, such as a multicast broadcast user plane function (Multicast Broadcast-UPF, MB-UPF), and the communication peer node may be a core network function, such as a user plane function (User Plane Function, UPF). The target resource is a user plane resource used for the target service between two core network functions.

Optionally, the target node may be a core network function, such as a UPF, and the communication peer node may be a core network function, such as a multicast broadcast user plane function (Multicast Broadcast-UPF, MB-UPF). The target resource is a user plane resource used for the target service between two core network functions.

Optionally, the target node is a core network function, and the communication peer node is a base station.

Optionally, the target node may be a core network function, and the communication peer node may be a base station. Based on an inactivation indication sent by a third party such as a session management function (Session Management Function, SMF) or an application service provider, the core network function may determine that the target service is in an inactive state.

Optionally, the target node is a terminal, and the communication peer node is a base station.

Optionally, the target node may be a terminal, and the communication peer node may be a base station. The target resource may be a user plane resource or a signaling plane resource used for the target service between the terminal and the base station.

Optionally, the determining that a target service is in an inactive state includes: determining, based on target indication information, that the target service is in an inactive state.

In a case that the target node is a base station, the target node can determine, based on the target indication information, that the target service is in an inactive state.

Optionally, the determining, based on the target indication information, that the target service is in an inactive state includes at least one of the following:
in a case that the target node is a base station, determining, based on first indication information sent by the core network function, that the target service is in an inactive state; and
in a case that the target node is a target base station in the handover scenario, determining, based on second indication information sent by a source base station, that the target service is in an inactive state.

Optionally, in a case that the target node is a base station, the method for determining by the target node that the target service is in an inactive state may include at least one of the following:
the core network function (such as an AMF, a UPF, or an MB-UPF) sends the first indication information to the base station, and the base station determines, based on the first indication information sent by the core network function, that the target service is in an inactive state; and
in the handover scenario, the source (source) base station sends the second indication information to the target node, that is, the target base station in the handover scenario, and the target base station determines, based on the second indication information sent by the source base station, that the target service is in an inactive state.

Optionally, the second indication information is included in at least one of the following:
a handover request message Handover Request;
an Xn interface establishment request message Xn SETUP REQUEST; and
a node configuration update message NG-RAN NODE CONFIGURATION UPDATE.

Optionally, in the handover scenario, the source (source) base station sends the second indication information to the target node, that is, the target base station in the handover scenario, by using at least one of the following methods:
being indicated in the handover request message (HandoverRequest), for example, the second indication information is included in a UE Context Information IE;
being indicated in the Xn interface establishment request message (Xn SETUP REQUEST) of the Xn Setup procedure; and
being indicated in the NG-RAN node configuration update message (NG-RAN NODE CONFIGURATION UPDATE) of the NG-RAN node Configuration Update procedure.

Optionally, that the target node processes the target resource includes:
performing, by the target node, the first target processing on the target resource.

Optionally, when the target node processes the target resource, the first target processing may be performed on the target resource, that is, at least one of the following may be performed:
being up to implementation (it is up to implementation), that is, no standardization is required and different manufacturers may have different resource processing methods;
maintaining a state of the target resource, that is, skipping establishing the target resource when the target resource has not been established, and retaining a currently established target resource when the target resource has been established, where the retaining the currently established target resource includes not releasing the target resource and/or retaining configuration information of the target resource;
releasing the target resource in a case that the target resource has been established; and
establishing the target resource in a case that the target resource has not been established.

Optionally, that the target node processes the target resource includes:
in a case of being in the handover scenario, performing, by the target node, the second target processing on the target resource.

For example, when the target node is a core network function and the communication peer node is a core network function, at least one of the following can be performed on the target resource used for the target service between the two core network functions:
being up to implementation (it is up to implementation), that is, no standardization is required and different manufacturers may have different resource processing methods;
maintaining a state of the target resource, that is, skipping establishing the target resource when the target resource has not been established, and retaining a currently established target resource when the target resource has been established, where the retaining the currently established target resource includes not releasing the target resource and/or retaining configuration information of the target resource;
releasing the target resource in a case that the target resource has been established; and
establishing the target resource in a case that the target resource has not been established.

For example, when the target node is a core network function and the communication peer node is a base station, or, when the target node is a base station and the communication peer node is a core network function, at least one of the following may be performed on the target resource used for the target service between the core network function and the base station:
being up to implementation (it is up to implementation), that is, no standardization is required and different manufacturers may have different resource processing methods;
maintaining a state of the target resource, that is, skipping establishing the target resource when the target resource has not been established, and retaining a currently established target resource when the target resource has been established, where the retaining the currently established target resource includes not releasing the target resource and/or retaining configuration information of the target resource;
releasing the target resource in a case that the target resource has been established; and
establishing the target resource in a case that the target resource has not been established.

Optionally, in a case of determining that the target service is in an inactive state, for the target resource being a target resource used for the target service between the target node and the communication peer node in the handover scenario, the target node performs the second target processing on the target resource. The second target processing is applicable to only the handover scenario, that is, at least one of the following may be performed:
being up to implementation (it is up to implementation), that is, no standardization is required and different manufacturers may have different resource processing methods;
maintaining a state of the target resource, that is, skipping establishing the target resource when the target resource has not been established, and retaining a currently established target resource when the target resource has been established, where the retaining the currently established target resource includes not releasing the target resource and/or retaining configuration information of the target resource;
releasing the target resource in a case that the target resource has been established; and
establishing the target resource in a case that the target resource has not been established.

Optionally, that the target node processes the target resource includes:
in a case of being in the handover scenario, performing, by the target node, the target processing on the target resource based on the target indication information obtained.

Optionally, in a case of determining that the target service is in an inactive state, for the target resource being a target resource used for the target service between the target node and the communication peer node in the handover scenario, the target node may determine a processing mode for the target resource based on the target indication information obtained, so as to implement at least one of the following:
being up to implementation (it is up to implementation), that is, no standardization is required and different manufacturers may have different resource processing methods;
maintaining a state of the target resource, that is, skipping establishing the target resource when the target resource has not been established, and retaining a currently established target resource when the target resource has been established, where the retaining the currently established target resource includes not releasing the target resource and/or retaining configuration information of the target resource;
releasing the target resource in a case that the target resource has been established; and
establishing the target resource in a case that the target resource has not been established.

Optionally, the performing, by the target node, the target processing on the target resource based on the target indication information obtained includes at least one of the following:
in a case that the target indication information includes only the first indication information, performing, by the target node, the first target processing on the target resource;
in a case that the target indication information includes only the second indication information, performing, by the target node, the second target processing on the target resource; and
in a case that the target indication information includes both the first indication information and the second indication information, performing at least one of the following:
   performing, by the target node, the first target processing on the target resource;
   performing, by the target node, the second target processing on the target resource;
   performing, by the target node, the target processing on the target resource based on a sequence of receiving the first indication information and the second indication information; and
   performing, by the target node, the target processing on the target resource based on priorities of the first target processing and the second target processing.

Optionally, in a case that the target indication information includes only the first indication information, that is, a method for determining by the base station that the target service is in an inactive state is based on the first indication information sent by the core network function to the base station, the target node may perform the first target processing on the target resource.

Optionally, in a case that the target indication information includes only the second indication information, that is, a method for determining by the base station that the target service is in an inactive state is based on the second indication information sent by the source base station to the base station in the handover scenario, the target node may perform the second target processing on the target resource, that is, performing the third target processing on the target resource between the source base station and the core network function, and/or performing the third target processing on the target resource between the target base station and the core network function.

Optionally, in a case that the target indication information includes the first indication information and the second indication information, that is, a method for determining by the base station that the target service is in an inactive state is based on the second indication information sent to the base station by the source base station in the handover scenario and the first indication information sent to the base station by the core network function, at least one of the following may be performed:
performing, by the target node, the first target processing on the target resource, that is, performing the first target processing on the target resource between the target node and the core network function;
performing, by the target node, the second target processing on the target resource, that is, performing the third target processing on the target resource between the source base station and the core network function, and/or performing the third target processing on the target resource between the target base station and the core network function;
performing, by the target node, the target processing on the target resource based on a sequence of receiving the first indication information and the second indication information; where for example, if the base station first receives the first indication information and then receives the second indication information, the first target processing may be performed on the target resource between the target base station and the core network function; for example, if the base station first receives the second indication information and then receives the first indication information, the third target processing may be performed on the target resource between the source base station and the core network function, and/or the third target processing may be performed on the target resource between the target base station and the core network function;
performing, by the target node, the target processing on the target resource based on priorities of the first target processing and the second target processing; where for example, a priority of content for the first target processing is compared with a priority of content of the second target processing, and a behavior with higher priority is executed; where a priority order may be any random order of "being up to implementation", "maintaining a state of the target resource", "releasing the target resource in a case that the target resource has been established", and "establishing the target resource in a case that the target resource has not been established", which is not limited in this embodiment of this application.

For example, the content of the first target processing is maintaining the state of the target resource, and the content of the second target processing is: for the target resource used for the target service between the source base station and the core network function, being up to implementation, and for the target resource used for the target service between the target base station and the core network function, releasing the target resource in a case that the target resource has been established. The order of priority is to maintaining the state of the target resource > releasing the target resource in a case that the target resource has been established > establishing the target resource in a case that the target resource has not been established > being up to implementation. In this case, the higher-priority behavior of "maintaining the state of the target resource" is performed, that is, maintaining the state of the target resource for the target resource used for the target service between the target base station and the core network function, and maintaining the state of the target resource for the target resource used for the target service between the source base station and the core network function.

Optionally, the performing target processing on the target resource based on the sequence of receiving the first indication information and the second indication information includes at least one of the following:
in a case that a time of receiving the first indication information is earlier than a time of receiving the second indication information, performing, by the target node, the first target processing on the target resource; and
in a case that a time of receiving the second indication information is earlier than a time of receiving the first indication information, performing, by the target node, the second target processing on the target resource.

Optionally, the target node may perform the target processing on the target resource based on a sequence of receiving the first indication information and the second indication information, where for example, if the base station first receives the first indication information and then receives the second indication information, the first target processing may be performed on the target resource between the target node and the core network function; for example, if the base station first receives the second indication information and then receives the first indication information, the third target processing may be performed on the target resource between the source base station and the core network function, and/or the third target processing may be performed on the target resource between the target base station and the core network function.

Optionally, the maintaining a state of the target resource includes at least one of the following:
retaining the target resource in a case that the target resource has been established; and
skipping establishing the target resource in a case that the target resource has not been established.

Optionally, a case of maintaining a state of the target resource may be skipping establishing the target resource when the target resource has not been established, and retaining a currently established target resource when the target resource has been established, where the retaining the currently established target resource includes not releasing the target resource and/or retaining configuration information of the target resource.

Optionally, the retaining the target resource includes at least one of the following:
skipping releasing the target resource; and
maintaining configuration information of the target resource.

Optionally, the retaining the target resource in a case that the target resource has been established may include: skipping releasing the target resource.

Optionally, the retaining the target resource in a case that the target resource has been established may include: maintaining configuration information of the target resource.

Optionally, in a case that the target node is a base station or a core network function, the method further includes:
in a case that the target service is changed to an active state, performing at least one of the following:
establishing the target resource in a case that the target resource has not been established;
sending an activation notification of the target service;
establishing the target resource in a case that the target resource having not been established and a terminal serving by a base station corresponding to the target resource needing to execute the target service are determined; and
sending an activation notification of the target service in a case that a terminal serving by a base station corresponding to the target resource needing to execute the target service is determined.

Optionally, after the target node performs target processing on the target resource in a case that the target node is a base station or a core network function, if the target service is changed from an inactive state to an active state, a behavior of the target node may include at least one of the following:
establishing the target resource in a case that the target resource has not been established;
sending an activation notification of the target service;
establishing the target resource in a case that the target resource has not been established and a terminal serving by a corresponding base station is interested in the target service; and
sending an activation notification of the target service in a case that a terminal serving by a corresponding base station is interested in the target service.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

It should be noted that, for the resource processing method provided by the embodiments of this application, the execution body may be a resource processing apparatus, or a control module for executing the resource processing method in the resource processing apparatus. In the embodiments of this application, the resource processing apparatus provided by the embodiments of this application is described by using the resource processing method being executed by the resource processing apparatus as an example.

FIG. 3 is a schematic structural diagram of a resource processing apparatus according to an embodiment of this application. As shown in FIG. 3, the resource processing apparatus includes a first execution module 310, and may also include a communication module 320 configured to communicate with a communication peer end.

The first execution module 310 is configured to: in a case of determining that a target service is in an inactive state, perform target processing on a target resource; where
the target processing includes at least one of the following:
first target processing, where when the target processing includes the first target processing, the target resource includes a resource used for the target service between the target node and a communication peer node; and
second target processing, where when the target processing includes the second target processing, the target resource includes a resource used for the target service between the target node and a communication peer node in a handover scenario; where
the first target processing includes at least one of the following:
   implementation determined by the target node;
   maintaining a state of the target resource;
   releasing the target resource in a case that the target resource has been established; and
   establishing the target resource in a case that the target resource has not been established; and
   the second target processing includes at least one of the following:
      in a case that the target resource is a resource used for the target service between a source base station for handover and a core network function in the handover scenario, performing third target processing on the target resource; and
      in a case that the target resource is a resource used for the target service between a target base station for handover and the core network function in the handover scenario, performing third target processing on the target resource; where
      the third target processing includes at least one of the following:
         implementation determined by the target node;
         maintaining a state of the target resource;
         releasing the target resource in a case that the target resource has been established; and
         establishing the target resource in a case that the target resource has not been established.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

Optionally, the target node is a base station, and the communication peer node is a core network function.

Optionally, the target node is a core network function, and the communication peer node is a core network function.

Optionally, the target node is a core network function, and the communication peer node is a base station.

Optionally, the target node is a terminal, and the communication peer node is a base station.

Optionally, the first execution module is further configured to:
determine, based on target indication information, that the target service is in an inactive state.

Optionally, the first execution module is further configured to perform at least one of the following:
in a case that the target node is a base station, determining, based on first indication information sent by the core network function, that the target service is in an inactive state; and
in a case that the target node is a target base station in the handover scenario, determining, based on second indication information sent by a source base station, that the target service is in an inactive state.

Optionally, the second indication information is included in at least one of the following:
a handover request message Handover Request;
an Xn interface establishment request message Xn SETUP REQUEST; and
a node configuration update message NG-RAN NODE CONFIGURATION UPDATE.

Optionally, the first execution module is further configured to:
perform the first target processing on the target resource.

Optionally, the first execution module is further configured to:
in a case of being in the handover scenario, perform the second target processing on the target resource.

Optionally, the first execution module is further configured to:
in a case of being in the handover scenario, perform the target processing on the target resource based on the target indication information obtained.

Optionally, the first execution module is further configured to perform at least one of the following:
in a case that the target indication information includes only the first indication information, performing the first target processing on the target resource;
in a case that the target indication information includes only the second indication information, performing the second target processing on the target resource; and
in a case that the target indication information includes both the first indication information and the second indication information, performing at least one of the following:
   performing the first target processing on the target resource;
   performing the second target processing on the target resource;
   performing the target processing on the target resource based on a sequence of receiving the first indication information and the second indication information; and
   performing the target processing on the target resource based on priorities of the first target processing and the second target processing.

Optionally, the first execution module is further configured to perform at least one of the following:
in a case that a time of receiving the first indication information is earlier than a time of receiving the second indication information, performing the first target processing on the target resource; and
in a case that a time of receiving the second indication information is earlier than a time of receiving the first indication information, performing the second target processing on the target resource.

Optionally, the first execution module is further configured to perform at least one of the following:
retaining the target resource in a case that the target resource has been established; and
skipping establishing the target resource in a case that the target resource has not been established.

Optionally, the first execution module is further configured to perform at least one of the following:
skipping releasing the target resource; and
maintaining configuration information of the target resource.

Optionally, in a case that the target node is a base station or a core network function, the apparatus further includes:
a second execution module, configured to: in a case that the target service is changed to an active state, perform at least one of the following:
establishing the target resource in a case that the target resource has not been established;
sending an activation notification of the target service;
establishing the target resource in a case that the target resource having not been established and a terminal serving by a base station corresponding to the target resource needing to execute the target service are determined; and
sending an activation notification of the target service in a case that a terminal serving by a base station corresponding to the target resource needing to execute the target service is determined.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

The resource processing apparatus in this embodiment of this application may be an apparatus, or an apparatus or electronic device having an operating system, or may be a component, an integrated circuit, or a chip in the terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The resource processing apparatus provided in this embodiment of this application can implement the processes implemented in the method embodiments in FIG. 1 and FIG. 2, with the same technical effects achieved. To avoid repetition, details are not described herein again.

Optionally, an embodiment of this application further provides a target node. The target node may be a base station, may be a core network function, or may be a terminal, and a communication peer node may be a base station.

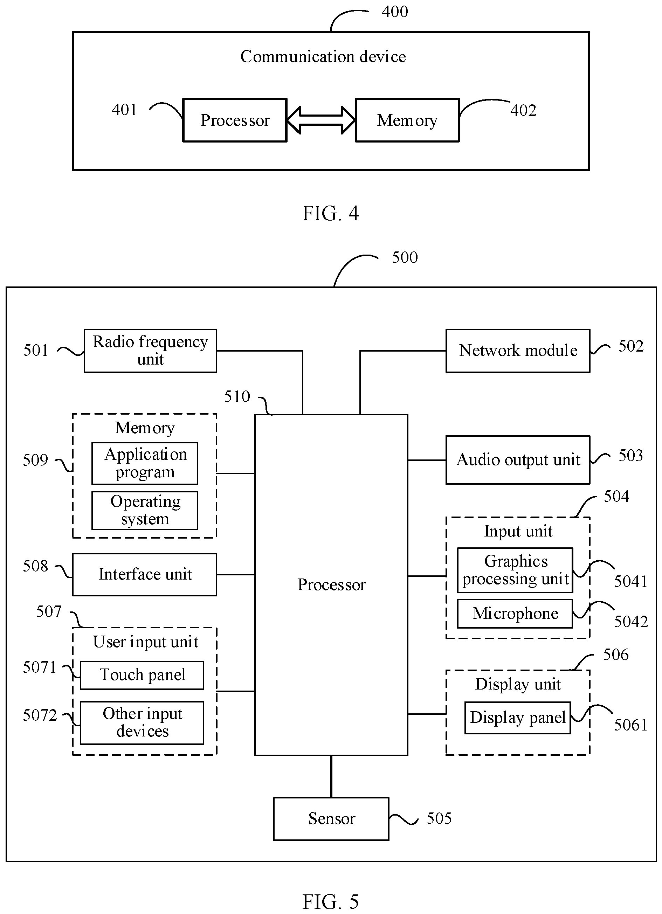

Optionally, FIG. 4 is a schematic structural diagram of a communication device according to an embodiment of this application. As shown in FIG. 4, an embodiment of this application further provides a communication device 400, including a processor 401, a memory 402, and a program or instructions stored in the memory 402 and capable of running on the processor 401. For example, when the communication device 400 is a terminal and when the program or instructions are executed by the processor 401, the processes of the foregoing embodiment of the resource processing method are implemented, with the same technical effects achieved. When the communication device 400 is a network-side device and when the program or instructions are executed by the processor 401, the processes of the foregoing embodiment of the resource processing method are implemented, with the same technical effects achieved. To avoid repetition, details are not described herein again.

Optionally, the target communication device may be a base station, a terminal, or a core network function. An embodiment of this application further provides a terminal, including a processor and a communication interface, and the processor is configured to:
in a case of determining that a target service is in an inactive state, perform target processing on a target resource; where
the target processing includes at least one of the following:
   first target processing, where when the target processing includes the first target processing, the target resource includes a resource used for the target service between the target node and a communication peer node; and
   second target processing, where when the target processing includes the second target processing, the target resource includes a resource used for the target service between the target node and a communication peer node in a handover scenario; where
   the first target processing includes at least one of the following:
      implementation determined by the target node;
      maintaining a state of the target resource;
      releasing the target resource in a case that the target resource has been established; and
      establishing the target resource in a case that the target resource has not been established; and
      the second target processing includes at least one of the following:
         in a case that the target resource is a resource used for the target service between a source base station for handover and a core network function in the handover scenario, performing third target processing on the target resource; and
         in a case that the target resource is a resource used for the target service between a target base station for handover and the core network function in the handover scenario, performing third target processing on the target resource; where
         the third target processing includes at least one of the following:
            implementation determined by the target node;
            maintaining a state of the target resource;
            releasing the target resource in a case that the target resource has been established; and
            establishing the target resource in a case that the target resource has not been established.

The terminal embodiments correspond to the foregoing terminal-side method embodiments, and the implementation processes and implementations of the foregoing method embodiments can be applied to the terminal embodiments, with the same technical effects achieved. Specifically, FIG. 5 is a schematic diagram of a hardware structure of a terminal for implementing the embodiments of this application.

The terminal 500 includes but is not limited to at least part of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than those shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, and the like. The user input unit 507 may include a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (such as a volume control key or a power on/off key), a trackball, a mouse, a joystick, and the like. Details are not described herein.

In this embodiment of this application, the radio frequency unit 501 receives downlink data from a network-side device, and then sends the downlink data to the processor 510 for processing; and also sends uplink data to the network-side device. Generally, the radio frequency unit 501 includes but is not limited to an antenna, at least one amplifier, a transceiver, a coupler, a low noise amplifier, a duplexer, and the like.

The memory 509 may be configured to store software programs or instructions and various data. The memory 509 may include a program or instruction storage area and a data storage area. The program or instruction storage area may store an operating system, an application program or instruction required by at least one function (for example, a sound playback function or an image playback function), and the like. In addition, the memory 509 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 510 may include one or more processing units. Optionally, an application processor and a modem processor may be integrated in the processor 510. The application processor primarily processes an operating system, user interfaces, application programs or instructions, and the like. The modem processor primarily processes radio communication, for example, being a baseband processor. It can be understood that the modem processor may alternatively be not integrated in the processor 510.

The processor 510 is configured to: in a case of determining that a target service is in an inactive state, perform target processing on a target resource; where
the target processing includes at least one of the following:
first target processing, where when the target processing includes the first target processing, the target resource includes a resource used for the target service between the target node and a communication peer node; and
second target processing, where when the target processing includes the second target processing, the target resource includes a resource used for the target service between the target node and a communication peer node in a handover scenario; where
the first target processing includes at least one of the following:
   implementation determined by the target node;
   maintaining a state of the target resource;
   releasing the target resource in a case that the target resource has been established; and
   establishing the target resource in a case that the target resource has not been established; and
   the second target processing includes at least one of the following:
      in a case that the target resource is a resource used for the target service between a source base station for handover and a core network function in the handover scenario, performing third target processing on the target resource; and
      in a case that the target resource is a resource used for the target service between a target base station for handover and the core network function in the handover scenario, performing third target processing on the target resource; where
      the third target processing includes at least one of the following:
         implementation determined by the target node;
         maintaining a state of the target resource;
         releasing the target resource in a case that the target resource has been established; and
         establishing the target resource in a case that the target resource has not been established.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

Optionally, the target node is a base station, and the communication peer node is a core network function.

Optionally, the target node is a core network function, and the communication peer node is a core network function.

Optionally, the target node is a core network function, and the communication peer node is a base station.

Optionally, the target node is a terminal, and the communication peer node is a base station.

Optionally, the processor 510 is further configured to:
determine, based on target indication information, that the target service is in an inactive state.

Optionally, the processor 510 is further configured to perform at least one of the following:
in a case that the target node is a base station, determining, based on first indication information sent by the core network function, that the target service is in an inactive state; and
in a case that the target node is a target base station in the handover scenario, determining, based on second indication information sent by a source base station, that the target service is in an inactive state.

Optionally, the second indication information is included in at least one of the following:
a handover request message Handover Request;
an Xn interface establishment request message Xn SETUP REQUEST; and
a node configuration update message NG-RAN NODE CONFIGURATION UPDATE.

Optionally, the processor 510 is further configured to:
perform the first target processing on the target resource.

Optionally, the processor 510 is further configured to:
in a case of being in the handover scenario, perform the second target processing on the target resource.

Optionally, the processor 510 is further configured to:
in a case of being in the handover scenario, perform the target processing on the target resource based on the target indication information obtained.

Optionally, the processor 510 is further configured to perform at least one of the following:
in a case that the target indication information includes only the first indication information, performing the first target processing on the target resource;
in a case that the target indication information includes only the second indication information, performing the second target processing on the target resource; and
in a case that the target indication information includes both the first indication information and the second indication information, performing at least one of the following:
   performing the first target processing on the target resource;
   performing the second target processing on the target resource;
   performing the target processing on the target resource based on a sequence of receiving the first indication information and the second indication information; and
   performing the target processing on the target resource based on priorities of the first target processing and the second target processing.

Optionally, the processor 510 is further configured to perform at least one of the following:
in a case that a time of receiving the first indication information is earlier than a time of receiving the second indication information, performing the first target processing on the target resource; and
in a case that a time of receiving the second indication information is earlier than a time of receiving the first indication information, performing the second target processing on the target resource.

Optionally, the processor 510 is further configured to perform at least one of the following:
retaining the target resource in a case that the target resource has been established; and
skipping establishing the target resource in a case that the target resource has not been established.

Optionally, the processor 510 is further configured to perform at least one of the following:
skipping releasing the target resource; and
maintaining configuration information of the target resource.

Optionally, the processor 510 is further configured to:
in a case that the target node is a base station or a core network function, perform at least one of the following:
establishing the target resource in a case that the target resource has not been established;
sending an activation notification of the target service;
establishing the target resource in a case that the target resource having not been established and a terminal serving by a base station corresponding to the target resource needing to execute the target service are determined; and
sending an activation notification of the target service in a case that a terminal serving by a base station corresponding to the target resource needing to execute the target service is determined.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

An embodiment of this application further provides a network-side device (a base station or core network device), including a processor and a communication interface, and the processor is configured to: in a case of determining that a target service is in an inactive state, perform target processing on a target resource; where
the target processing includes at least one of the following:
first target processing, where when the target processing includes the first target processing, the target resource includes a resource used for the target service between the target node and a communication peer node; and
second target processing, where when the target processing includes the second target processing, the target resource includes a resource used for the target service between the target node and a communication peer node in a handover scenario; where
the first target processing includes at least one of the following:
   implementation determined by the target node;
   maintaining a state of the target resource;
   releasing the target resource in a case that the target resource has been established; and
   establishing the target resource in a case that the target resource has not been established; and
   the second target processing includes at least one of the following:
      in a case that the target resource is a resource used for the target service between a source base station for handover and a core network function in the handover scenario, performing third target processing on the target resource; and
      in a case that the target resource is a resource used for the target service between a target base station for handover and the core network function in the handover scenario, performing third target processing on the target resource; where
      the third target processing includes at least one of the following:
         implementation determined by the target node;
         maintaining a state of the target resource;
         releasing the target resource in a case that the target resource has been established; and
         establishing the target resource in a case that the target resource has not been established.

The network-side device embodiments correspond to the foregoing network-side device method embodiments, and the implementation processes and implementations of the foregoing method embodiments can be applied to the network-side device embodiments, with the same technical effects achieved.

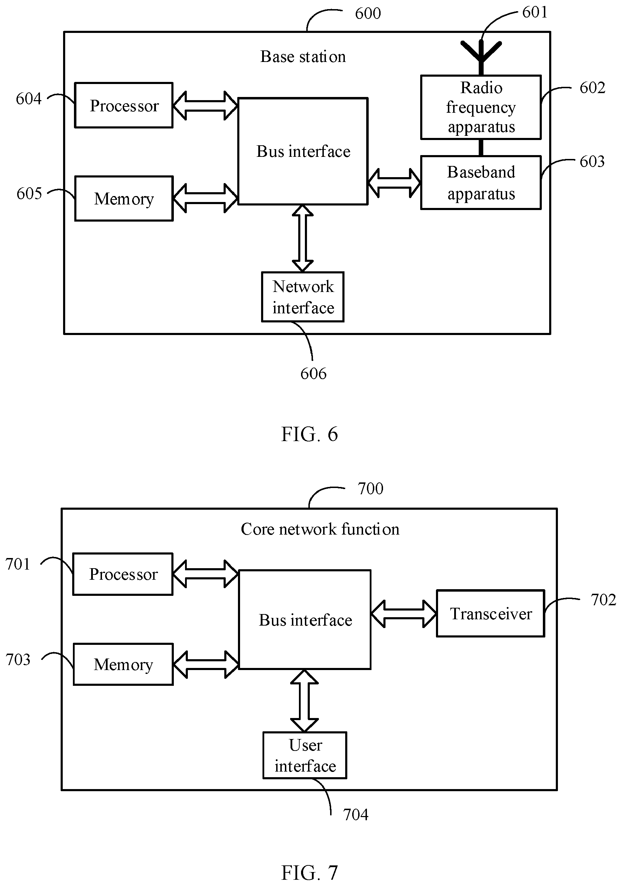

Specifically, an embodiment of this application further provides a base station. FIG. 6 is a schematic diagram of a hardware structure of a base station for implementing the embodiments of this application. As shown in FIG. 6, the base station 600 includes an antenna 601, a radio frequency apparatus 602, and a baseband apparatus 603. The antenna 601 is connected to the radio frequency apparatus 602. In an uplink direction, the radio frequency apparatus 602 receives information by using the antenna 601, and sends the received information to the baseband apparatus 603 for processing. In a downlink direction, the baseband apparatus 603 processes to-be-sent information, and sends the information to the radio frequency apparatus 602; and the radio frequency apparatus 602 processes the received information and then sends the information out by using the antenna 601.

The frequency band processing apparatus may be located in the baseband apparatus 603. The method performed by the network-side device in the foregoing embodiments may be implemented in the baseband apparatus 603, and the baseband apparatus 603 includes a processor 604 and a memory 605.

The baseband apparatus 603 may include, for example, at least one baseband processing unit, where a plurality of chips are disposed on the baseband processing unit. As shown in FIG. 6, one of the chips is, for example, the processor 604, connected to the memory 605, to invoke a program in the memory 605 to perform the operation of the network device shown in the foregoing method embodiment.

The baseband apparatus 603 may further include a network interface 606, configured to exchange information with the radio frequency apparatus 602, where the interface is, for example, a common public radio interface (common public radio interface, CPRI for short).

Specifically, the network-side device in this embodiment of the present invention further includes: instructions or a program stored in the memory 605 and capable of running on the processor 604. The processor 604 invokes the instructions or program in the memory 605 to execute the method executed by the modules shown in FIG. 3, with the same technical effects achieved. To avoid repetition, details are not repeated herein.

The processor 610 is configured to: in a case of determining that a target service is in an inactive state, perform target processing on a target resource; where
the target processing includes at least one of the following:
first target processing, where when the target processing includes the first target processing, the target resource includes a resource used for the target service between the target node and a communication peer node; and
second target processing, where when the target processing includes the second target processing, the target resource includes a resource used for the target service between the target node and a communication peer node in a handover scenario; where
the first target processing includes at least one of the following:
   implementation determined by the target node;
   maintaining a state of the target resource;
   releasing the target resource in a case that the target resource has been established; and
   establishing the target resource in a case that the target resource has not been established; and
   the second target processing includes at least one of the following:
      in a case that the target resource is a resource used for the target service between a source base station for handover and a core network function in the handover scenario, performing third target processing on the target resource; and
      in a case that the target resource is a resource used for the target service between a target base station for handover and the core network function in the handover scenario, performing third target processing on the target resource; where
      the third target processing includes at least one of the following:
         implementation determined by the target node;
         maintaining a state of the target resource;
         releasing the target resource in a case that the target resource has been established; and
         establishing the target resource in a case that the target resource has not been established.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

Optionally, the target node is a base station, and the communication peer node is a core network function.

Optionally, the target node is a core network function, and the communication peer node is a core network function.

Optionally, the target node is a core network function, and the communication peer node is a base station.

Optionally, the target node is a terminal, and the communication peer node is a base station.

Optionally, the processor 610 is further configured to:
determine, based on target indication information, that the target service is in an inactive state.

Optionally, the processor 610 is further configured to perform at least one of the following:
in a case that the target node is a base station, determining, based on first indication information sent by the core network function, that the target service is in an inactive state; and
in a case that the target node is a target base station in the handover scenario, determining, based on second indication information sent by a source base station, that the target service is in an inactive state.

Optionally, the second indication information is included in at least one of the following:
a handover request message Handover Request;
an Xn interface establishment request message Xn SETUP REQUEST; and
a node configuration update message NG-RAN NODE CONFIGURATION UPDATE.

Optionally, the processor 610 is further configured to:
perform the first target processing on the target resource.

Optionally, the processor 610 is further configured to:
in a case of being in the handover scenario, perform the second target processing on the target resource.

Optionally, the processor 610 is further configured to:
in a case of being in the handover scenario, perform the target processing on the target resource based on the target indication information obtained.

Optionally, the processor 610 is further configured to perform at least one of the following:
in a case that the target indication information includes only the first indication information, performing the first target processing on the target resource;
in a case that the target indication information includes only the second indication information, performing the second target processing on the target resource; and
in a case that the target indication information includes both the first indication information and the second indication information, performing at least one of the following:
   performing the first target processing on the target resource;
   performing the second target processing on the target resource;
   performing the target processing on the target resource based on a sequence of receiving the first indication information and the second indication information; and
   performing the target processing on the target resource based on priorities of the first target processing and the second target processing.

Optionally, the processor 610 is further configured to perform at least one of the following:
in a case that a time of receiving the first indication information is earlier than a time of receiving the second indication information, performing the first target processing on the target resource; and
in a case that a time of receiving the second indication information is earlier than a time of receiving the first indication information, performing the second target processing on the target resource.

Optionally, the processor 610 is further configured to perform at least one of the following:
retaining the target resource in a case that the target resource has been established; and
skipping establishing the target resource in a case that the target resource has not been established.

Optionally, the processor 610 is further configured to perform at least one of the following:
skipping releasing the target resource; and
maintaining configuration information of the target resource.

Optionally, the processor 610 is further configured to:
in a case that the target node is a base station or a core network function, perform at least one of the following:
establishing the target resource in a case that the target resource has not been established;
sending an activation notification of the target service;
establishing the target resource in a case that the target resource having not been established and a terminal serving by a base station corresponding to the target resource needing to execute the target service are determined; and
sending an activation notification of the target service in a case that a terminal serving by a base station corresponding to the target resource needing to execute the target service is determined.

In this embodiment of the application, a corresponding processing mode for the target service is determined in a case that the target service is in an inactive state, so as to implement processing on the target resource, such as establishing or releasing, or maintaining the state, and different target resources and processing are applied to the handover scenario, thereby improving resource utilization.

Specifically, an embodiment of this application further provides a core network function. FIG. 7 is a schematic diagram of a hardware structure of a core network function for implementing the embodiments of this application. As shown in FIG. 7, the core network function 700 includes a processor 701, a transceiver 702, a memory 703, a user interface 704, and a bus interface.

Specifically, in this embodiment of the present invention, the core network function 700 further includes: a computer program stored in the memory 703 and capable of running on the processor 701. The computer program is executed by the processor 701 to implement the method executed by the modules shown in FIG. 3, with the same technical effects achieved. To avoid repetition, details are not repeated herein.

In FIG. 7, a bus architecture may include any quantity of interconnected buses and bridges, specifically for interconnecting various circuits of one or more processors represented by the processor 701 and a memory represented by the memory 703. The bus architecture may further interconnect various other circuits such as a peripheral device, a voltage regulator, and a power management circuit. These are all well known in the art, and therefore are not further described in this specification. The bus interface provides an interface. The transceiver 702 may be a plurality of components, including a transmitter and a receiver, and provides units for communicating with a variety of other apparatuses on a transmission medium. For different user equipments, the user interface 704 may also be an interface that can be externally or internally connected to a required device. The connected device includes but is not limited to a keypad, a display, a speaker, a microphone, a joystick, and the like.

The processor 701 is responsible for management of the bus architecture and general processing, and the memory 703 is capable of storing data that is used by the processor 701 during operation.

An embodiment of this application further provides a readable storage medium, where a program or instructions are stored in the readable storage medium. When the program or the instructions are executed by a processor, the processes of the foregoing embodiment of the resource processing method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the resource processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A resource processing method, comprising:
in a case of determining that a target service is in an inactive state, performing, by a target node, target processing on a target resource; wherein
the target processing comprises at least one of the following:
first target processing, wherein when the target processing comprises the first target processing, the target resource is a resource used for the target service between the target node and a communication peer node; and
second target processing, wherein when the target processing comprises the second target processing, the target resource is a resource used for the target service between the target node and a communication peer node in a handover scenario; wherein
the first target processing comprises at least one of the following:
implementation determined by the target node;
maintaining a state of the target resource;
releasing the target resource in a case that the target resource has been established; and
establishing the target resource in a case that the target resource has not been established; and
the second target processing comprises at least one of the following:
in a case that the target resource is a resource used for the target service between a source base station for handover and a core network function in the handover scenario, performing third target processing on the target resource; and
in a case that the target resource is a resource used for the target service between a target base station for handover and the core network function in the handover scenario, performing third target processing on the target resource; wherein
the third target processing comprises at least one of the following:
implementation determined by the target node;
maintaining a state of the target resource;
releasing the target resource in a case that the target resource has been established; and
establishing the target resource in a case that the target resource has not been established.

2. The resource processing method according to claim 1, wherein the target node is a base station, and the communication peer node is a core network function.

3. The resource processing method according to claim 1, wherein the target node is a core network function, and the communication peer node is a core network function.

4. The resource processing method according to claim 1, wherein the target node is a core network function, and the communication peer node is a base station.

5. The resource processing method according to claim 1, wherein the target node is a terminal, and the communication peer node is a base station.

6. The resource processing method according to claim 1, wherein the determining that a target service is in an inactive state comprises: determining, based on target indication information, that the target service is in an inactive state.

7. The resource processing method according to claim 6, wherein the determining, based on target indication information, that the target service is in an inactive state comprises at least one of the following:
in a case that the target node is a base station, determining, based on first indication information sent by the core network function, that the target service is in an inactive state; and
in a case that the target node is a target base station in the handover scenario, determining, based on second indication information sent by a source base station, that the target service is in an inactive state.

8. The resource processing method according to claim 7, wherein the second indication information comprises at least one of the following:
a handover request message Handover Request;
an Xn interface establishment request message Xn SETUP REQUEST; and
a node configuration update message NG-RAN NODE CONFIGURATION UPDATE.

9. The resource processing method according to any one of claims 2 to 5, wherein the performing, by a target node, target processing on a target resource comprises:
performing, by the target node, the first target processing on the target resource.

10. The resource processing method according to any one of claims 2 to 5, wherein the performing, by a target node, target processing on a target resource comprises:
in a case of being in the handover scenario, performing, by the target node, the second target processing on the target resource.

11. The resource processing method according to claim 8, wherein the performing, by a target node, target processing on a target resource comprises:
in a case of being in the handover scenario, performing, by the target node, the target processing on the target resource based on the target indication information obtained.

12. The resource processing method according to claim 11, wherein the performing, by the target node, the target processing on the target resource based on the target indication information obtained comprises at least one of the following:
in a case that the target indication information comprises only the first indication information, performing, by the target node, the first target processing on the target resource;
in a case that the target indication information comprises only the second indication information, performing, by the target node, the second target processing on the target resource; and
in a case that the target indication information comprises both the first indication information and the second indication information, performing at least one of the following:
performing, by the target node, the first target processing on the target resource;
performing, by the target node, the second target processing on the target resource;
performing, by the target node, the target processing on the target resource based on a sequence of receiving the first indication information and the second indication information; and
performing, by the target node, the target processing on the target resource based on priorities of the first target processing and the second target processing.

13. The resource processing method according to claim 12, wherein the performing the target processing on the target resource based on a sequence of receiving the first indication information and the second indication information comprises at least one of the following:
in a case that a time of receiving the first indication information is earlier than a time of receiving the second indication information, performing, by the target node, the first target processing on the target resource; and
in a case that a time of receiving the second indication information is earlier than a time of receiving the first indication information, performing, by the target node, the second target processing on the target resource.

14. The resource processing method according to any one of claims 2 to 8 or any one of claims 10 to 13, wherein the maintaining a state of the target resource comprises at least one of the following:
retaining the target resource in a case that the target resource has been established; and
skipping establishing the target resource in a case that the target resource has not been established.

15. The resource processing method according to claim 14, wherein the retaining the target resource comprises at least one of the following:
skipping releasing the target resource; and
maintaining configuration information of the target resource.

16. The resource processing method according to any one of claims 2 to 8 or any one of claims 10 to 13, wherein in a case that the target node is a base station or a core network function, the method further comprises:
in a case that the target service is changed to an active state, performing at least one of the following:
establishing the target resource in a case that the target resource has not been established;
sending an activation notification of the target service;
establishing the target resource in a case that the target resource having not been established and a terminal serving by a base station corresponding to the target resource needing to execute the target service are determined; and
sending an activation notification of the target service in a case that a terminal serving by a base station corresponding to the target resource needing to execute the target service is determined.

17. A resource processing apparatus, comprising:
a first execution module, configured to: in a case of determining that a target service is in an inactive state, perform target processing on a target resource; wherein
the target processing comprises at least one of the following:
first target processing, wherein when the target processing comprises the first target processing, the target resource comprises a resource used for the target service between the target node and a communication peer node; and
second target processing, wherein when the target processing comprises the second target processing, the target resource comprises a resource used for the target service between the target node and a communication peer node in a handover scenario; wherein
the first target processing comprises at least one of the following:
implementation determined by the target node;
maintaining a state of the target resource;
releasing the target resource in a case that the target resource has been established; and
establishing the target resource in a case that the target resource has not been established; and
the second target processing comprises at least one of the following:
in a case that the target resource is a resource used for the target service between a source base station for handover and a core network function in the handover scenario, performing third target processing on the target resource; and
in a case that the target resource is a resource used for the target service between a target base station for handover and the core network function in the handover scenario, performing third target processing on the target resource; wherein
the third target processing comprises at least one of the following:
implementation determined by the target node;
maintaining a state of the target resource;
releasing the target resource in a case that the target resource has been established; and
establishing the target resource in a case that the target resource has not been established.

18. The resource processing apparatus according to claim 17, wherein the target node is a base station, and the communication peer node is a core network function.

19. The resource processing apparatus according to claim 17, wherein the target node is a core network function, and the communication peer node is a core network function.

20. The resource processing apparatus according to claim 17, wherein the target node is a core network function, and the communication peer node is a base station.

21. The resource processing apparatus according to claim 17, wherein the target node is a terminal, and the communication peer node is a base station.

22. The resource processing apparatus according to claim 17, wherein the first execution module is further configured to:
determine, based on target indication information, that the target service is in an inactive state.

23. The resource processing apparatus according to claim 22, wherein the first execution module is further configured to perform at least one of the following:
in a case that the target node is a base station, determining, based on first indication information sent by the core network function, that the target service is in an inactive state; and
in a case that the target node is a target base station in the handover scenario, determining, based on second indication information sent by a source base station, that the target service is in an inactive state.

24. The resource processing apparatus according to claim 23, wherein the second indication information comprises at least one of the following:
a handover request message Handover Request;
an Xn interface establishment request message Xn SETUP REQUEST; and
a node configuration update message NG-RAN NODE CONFIGURATION UPDATE.

25. The resource processing apparatus according to any one of claims 18 to 21, wherein the first execution module is further configured to:
perform the first target processing on the target resource.

26. The resource processing apparatus according to any one of claims 18 to 21, wherein the first execution module is further configured to:
in a case of being in the handover scenario, perform the second target processing on the target resource.

27. The resource processing apparatus according to claim 23, wherein the first execution module is further configured to:
in a case of being in the handover scenario, perform the target processing on the target resource based on the target indication information obtained.

28. The resource processing apparatus according to claim 27, wherein the first execution module is further configured to perform at least one of the following:
in a case that the target indication information comprises only the first indication information, performing the first target processing on the target resource;
in a case that the target indication information comprises only the second indication information, performing the second target processing on the target resource; and
in a case that the target indication information comprises both the first indication information and the second indication information, performing at least one of the following:
performing the first target processing on the target resource;
performing the second target processing on the target resource;
performing the target processing on the target resource based on a sequence of receiving the first indication information and the second indication information; and
performing the target processing on the target resource based on priorities of the first target processing and the second target processing.

29. The resource processing apparatus according to claim 28, wherein the first execution module is further configured to perform at least one of the following:
in a case that a time of receiving the first indication information is earlier than a time of receiving the second indication information, performing the first target processing on the target resource; and
in a case that a time of receiving the second indication information is earlier than a time of receiving the first indication information, performing the second target processing on the target resource.

30. The resource processing apparatus according to any one of claim 18 to 24 or any one of claims 26 to 29, wherein the first execution module is further configured to perform at least one of the following:
retaining the target resource in a case that the target resource has been established; and
skipping establishing the target resource in a case that the target resource has not been established.

31. The resource processing apparatus according to claim 30, wherein the first execution module is further configured to perform at least one of the following:
skipping releasing the target resource; and
maintaining configuration information of the target resource.

32. The resource processing apparatus according to any one of claim 18 to 24 or any one of claims 26 to 29, wherein in a case that the target node is a base station or a core network function, the apparatus further comprises:
a second execution module, configured to: in a case that the target service is changed to an active state, perform at least one of the following:
establishing the target resource in a case that the target resource has not been established;
sending an activation notification of the target service;
establishing the target resource in a case that the target resource having not been established and a terminal serving by a base station corresponding to the target resource needing to execute the target service are determined; and
sending an activation notification of the target service in a case that a terminal serving by a base station corresponding to the target resource needing to execute the target service is determined.

33. A target node, comprising a processor, a memory, and a program or instructions stored in the memory and capable of running on the processor, wherein the program or instructions are executed by the processor to implement the steps of the resource processing method according to any one of claims 1 to 16.

34. A readable storage medium, wherein the readable storage medium stores a program or instructions, and when the program or instructions are executed by a processor, the steps of the resource processing method according to any one of claims 1 to 16 are implemented.

35. A chip, wherein the chip comprises a processor and a communication interface, the communication interface is coupled to the processor, and the processor is configured to execute a program or instructions to implement the steps of the resource processing method according to any one of claims 1 to 16.

36. A computer program, wherein the computer program is stored in a non-transitory storage medium, and the computer program is executed by at least one processor to implement the steps of the resource processing method according to any one of claims 1 to 16.
